# EUROPÄISCHE PATENTANMELDUNG

(11) **EP 2 837 463 A1**
(43) Veröffentlichungstag der Anmeldung: **18.02.2015**
(21) Anmeldenummer: 14179353.9
(22) Anmeldetag: 31.07.2014
(51) Int. Cl.: B23Q 1/00, B23Q 5/04

(54) **Werkzeugmaschine mit einer Primärspule zur kontaktlosen Energie- und/oder Signalübertragung**

(30) Priorität: 12.08.2013 AT 504992013
(71) Anmelder: WFL Millturn Technologies GmbH & Co. KG, 4030 Linz (AT)
(72) Erfinder: Maringer, Herbert, 4642 Sattledt (AT)
(74) Vertreter: Jell, Friedrich

(57) **Zusammenfassung**

Es wird eine Werkzeugmaschine (1) mit einer Primärspule (9) zur kontaktlosen Energie- und/oder Signalübertragung, mit einem eine Werkzeugaufnahme (4) aufweisenden Spindelkopf (2) für ein Werkzeug (6), das eine mit der Primärspule (9) der Werkzeugmaschine (1) koppelbare Sekundärspule (10) aufweist, und mit einer Einrichtung (13) zur Verlagerung der Primärspule (9) von einer entkoppelten Ruhelage (11) in eine Koppellage (12) mit der Sekundärspule (10) des aufgenommenen Werkzeugs (6) gezeigt. Um eine sichere und standfeste kontaktlose Energie- und/oder Signalübertragung zu schaffen, wird vorgeschlagen, dass die Einrichtung (13) zur Verlagerung der Primärspule (9) sowohl mindestens einen am Spindelkopf (2) ortsfest befestigten Anschlag (14) als auch wenigstens einen mit Primärspule (9) verbundenen und mitbewegten Gegenanschlag (15) aufweist, der mit dem Anschlag (14) zur am Spindelkopf (2) ortsfesten Lagerung (36) der sich in Koppellage (12) befindlichen Primärspule (9) formschlüssig zusammenwirkt.

## Beschreibung

Die Erfindung betrifft eine Werkzeugmaschine mit einer Primärspule zur kontaktlosen Energie- und/oder Signalübertragung, mit einem eine Werkzeugaufnahme aufweisenden Spindelkopf für ein Werkzeug, das eine mit der Primärspule der Werkzeugmaschine koppelbare Sekundärspule aufweist, und mit einer Einrichtung zur Verlagerung der Primärspule von einer entkoppelten Ruhelage in eine Koppellage mit der Sekundärspule des aufgenommenen Werkzeugs.

Um Werkzeuge kontaktlos mit elektrischer Energie zu versorgen, ist es aus dem Stand der Technik (DE4330820A1, DE102007024503B3) bekannt, neben der Werkzeugaufnahme eines Spindelkopfs eine Primärspule vorzusehen, die mit einer Sekundärspule des in der Werkzeugaufnahme eingespannten Werkzeugs induktiv gekoppelt ist. Die DE102007024503B3 zeigt weiter, die Primärspule der Werkzeugaufnahme von einer entkoppelten Ruhelage in eine Koppelage mit der Sekundärspule des Werkzeugs zu verlagern. Hierfür ist am Spindelkopf eine Einrichtung mit einem Hebelsystem befestigt, das über Hebelarme die Primärspule zur Sekundärspule hinbewegen kann. Nachteilig steht eine derartige Befestigung am Spindelkopf dessen kompakte Ausführung entgegen, insbesondere dann, wenn am Spindelkopf vergleichsweise schwerer Primärspulen aufgrund eine hoher Leistungsübertragungen gefordert sind. Zudem kann es bei Erschütterungen am Werkzeug bzw. bei einer Bewegung des Spindelkopfs, beispielsweise um damit eine andere Bearbeitungsposition gegenüber dem Werkstücke einnehmen zu können, zu nachteiligen Verlagerungen der mitbewegten Primärspule kommen. Dies kann nicht nur die Energie- und/oder Signalübertragung zwischen Primär- und Sekundärspule beeinträchtigen bzw. stören, auch Beschädigungen durch Berührung der beiden Spulen sind nicht ausschließen.

Die Erfindung hat sich daher die Aufgabe gestellt, ausgehend vom eingangs geschilderten Stand der Technik eine Werkzeugmaschine zu schaffen, die eine gefahrlose und standfeste berührungslose Energie- und/oder Signalübertragung gewährleisten kann, auch wenn dabei der Spindelkopf bewegt wird.

Die Erfindung löst die gestellte Aufgabe dadurch, dass die Einrichtung zur Verlagerung der Primärspule sowohl mindestens einen am Spindelkopf ortsfest befestigten Anschlag als auch wenigstens einen mit Primärspule verbundenen und mitbewegten Gegenanschlag aufweist, der mit dem Anschlag zur am Spindelkopf ortsfesten Lagerung der sich in Koppellage befindlichen Primärspule formschlüssig zusammenwirkt.

Weist die Einrichtung zur Verlagerung der Primärspule sowohl mindestens einen am Spindelkopf ortsfest befestigten Anschlag als auch wenigstens einen mit Primärspule verbundenen und mitbewegten Gegenanschlag auf, kann sich damit die Möglichkeit eröffnen, die Primärspule in ihrer Koppellage genau zu positionieren bzw. zu fixieren. Hierfür wirkt nämlich der Gegenanschlag mit dem Anschlag zur am Spindelkopf ortsfesten Lagerung der sich in Koppellage befindlichen Primärspule formschlüssig zusammen. Auf Basis dieser zuverlässigen Anschlagfixierung der Primärspule, welche Anschlagfixierung sich durch den Formschluss zwischen mindestens einer Anschlagfläche des Anschlags und mindestens einer Gegenfläche des Gegenanschlags ergibt, können selbst erhebliche Erschütterungen am Werkzeug abfangen werden. Eine standfeste und insbesondere auch gefahrlose kontaktlose Übertragung von Energie- und/oder Signalen kann somit sichergestellt werden. Außerdem kann damit die Primärspule einer Bewegung des Spindelkopfs exakt folgen, was für eine mehrachsige Werkzeugführung an der Werkzeugmaschine vorteilhaft sein kann. Zudem kann man durch diese Anschlagfixierung, mit der eine Bewegung der Primärspule in wenigstens zwei Achsen gesperrt ist, eine Berührung der beiden Spulen zuverlässig verhindern. Eine Beschädigung der gekoppelten Spulen ist somit vermeidbar. Die erfindungsgemäße Werkzeugmaschine kann daher trotz kontaktloser Energie- und/oder Signalübertragung eine hohe Standfestigkeit gewährleisten.

Im Allgemeinen wird erwähnt, dass die Primär- bzw. Sekundärspule einem Primärteil (Stator) bzw. Sekundärteil (Rotor) zugeordnet werden können. Primär- bzw. Sekundärteil, die vorzugsweise induktiv über die Spulen gekoppelt sind, können zudem zum Schutz ihrer Spulen je ein Spulengehäuse aufweisen. Des Weiteren wird im Allgemeinen erwähnt, dass Anschlag und Gegenanschlag jegliche zweidimensionale Fläche aufweisen können, um bei Zusammenwirken eine ortsfeste Lagerung der Primärspule zu gewährleisten. Vorstellbar ist eine Kombination aus Kugelfläche und Innenfläche einer Pfanne bzw. ebene, konische oder zylindrische Flächen und dergleichen.

Konstruktive Einfachheit hinsichtlich der Ausbildung des Anschlags samt seinem Gegenanschlag kann erreicht werden, wenn der Anschlag wenigstens zwei zueinander geneigt verlaufende Anschlagflächen aufweist, die mit Gegenflächen des Gegenanschlags zusammenwirken. Zudem können derart zusammenwirkende Zentrierungsflächen eine gegenüber Positionierungsfehlern tolerante Führung der Primärspule in ihre Koppellage sicherstellen, was Standfestigkeit und Bearbeitungsgenauigkeit der Werkzeugmaschine erhöhen kann.

Diese konstruktiven Voraussetzungen können noch weiter vereinfacht werden, wenn die Anschlagflächen an den Keilschenkeln des Anschlags vorgesehen sind.

Der Anschlag weist auf jedem Keilschenkel eine insbesondere v-förmige Ausnehmung mit je zwei Anschlagflächen auf. Damit kann der Gegenanschlag durch die vergleichsweise hohe Passgenauigkeit in Richtung des Anschlags mit vergleichsweise engen Toleranzen geführt werden.

Vorstehendes kann weiter verbessert werden, wenn die Querschnittsfläche des Anschlags in Ihrer Kontur wenigstens bereichsweise jener eines Doppelprismas entspricht.

Vereinfachte Montagebedingungen können sich ergeben, wenn der Anschlag an der Stirnseite des Spindelkopfs befestigt ist.

Um den Anschlag bzw. damit die Primärspule besonders genau zum eingespannten Werkzeug beziehungsweise zu seiner Sekundärspule ausrichten zu können, ist zwischen Anschlag und Spindelkopf eine auswechselbare Zwischenplatte vorgesehen. Diese auswechselbare Zwischenplatte kann zudem dazu genutzt werden, den Luftspalt zwischen Primär- und Sekundärspule einzustellen bzw. anzupassen.

Die Primärspule kann von der Ruhelage in eine Koppellage auf konstruktiv einfache Weise verlagert werden, wenn die Einrichtung zur Verlagerung der Primärspule eine Führung aufweist. Insbesondere eine Linearführung kann sich dabei bewähren. Zur Gewichtsentlastung des Spindelkopfs kann weiter vorgesehen sein, dass diese Führung getrennt vom Spindelkopf an der Werkzeugmaschine befestigt ist. Für eine exakte Positionierung der Primärspule kann es nämlich ausreichen, wenn am Spindelkopf nur der Anschlag vorgesehen ist. So werden unter anderem Einsatz und Verwendung eines vergleichsweise leichten und kompakten Spindelkopfs ermöglicht.

Weist die Werkzeugmaschine einen Schlitten auf, kann es sich als zweckmäßig herausstellen, wenn Spindelkopf und Führung an einem Schlitten der Werkzeugmaschine gemeinsam befestigt sind. Beispielsweise können damit Beschränkungen des Arbeitsbereichs der Werkzeugmaschine vermindert werden, die sich durch die Einrichtung zur Verlagerung der Primärspule ergeben können.

Besonders kann sich die erfindungsgemäße Lösung mit einem Anschlag und damit zusammenwirkendem Gegenanschlag bei einer Werkzeugmaschine auszeichnen, bei welcher der Spindelkopf schwenkbar gelagert ist, um damit eine genaue mehrachsige Führung des Werkzeugs sicherzustellen.

Konstruktiv einfach gelöst kann der Gegenanschlag über einen mit dem Spindelkopf mitbewegbaren Schwenkarm an der Werkzeugmaschine schwenkbar gelagert sein. So kann der Schwenkarm ausreichend Montageraum für Führungselemente zur Führung des mit der Primärspule mitbewegten Gegenanschlags eröffnen.

Vereinfachte Führungsverhältnisse zum Mitführen der Primärspule mit dem Werkzeug können sich ergeben, wenn Spindelkopf und Schwenkarm um eine gemeinsame Schwenkachse drehbar gelagert sind. Eine derartige Führungsvariante kann auch vergleichsweise einfach konstruktiv verwirklicht werden, womit wiederum eine kostengünstige Werkzeugmaschine geschaffen werden kann.

Der Schwenkarm kann zum Schutz der Primärspule genutzt werden, wenn dieser ein Schutzgehäuse aufweist, in dem die Primärspule von ihrer vom Schutzgehäuse verdeckten Ruhelage in ihre dem Schutzgehäuse vorstehende Koppellage beweglich gelagert ist. Dies kann bei spanabtragenden Werkzeugen insbesondere von Vorteil sein, um die Primärspule vor Spänen vom Werkstück zu schützen.

Eine Reinigung des Anschlags am Spindelkopf kann auf einfache Weise ermöglicht werden, wenn an der Werkzeugmaschine mindestens eine Reinigungsdüse vorgesehen ist. Damit können unter anderem Verschmutzungen vom Anschlag abgelöst werden, um die gewünschte Anschlagfixierung der Primärspule beizubehalten bzw. zu erreichen.

Die Reinigung des Anschlags kann besonders leicht und effektiv erfolgen, wenn der Spindelkopf für eine Bewegung in eine gegenüber der Reinigungsdüse ausgerichtete Reinigungslage ausgebildet ist. Außerdem kann sich damit das Ausrichten der Reinigungsdüse und ein manuelles oder automatisches Überprüfen des Bereichs um die Primärspule und Sekundärspule auf Spanfreiheit erleichtern.

In den Figuren ist beispielsweise der Erfindungsgegenstand anhand einer Ausführungsvariante näher dargestellt. Es zeigen
- Fig. 1: eine aufgerissene Frontansicht auf eine teilweise dargestellte Werkzeugmaschine mit entkoppelter Primär und Sekundärspule und ohne eingespanntem Werkzeug,
- Fig. 2: eine Schnittansicht nach II-II der Fig. 1 bei gekoppelter Primär und Sekundärspule,
- Fig. 3: eine teilweise aufgerissene Seitenansicht der nach Fig. 1 dargestellten Werkzeugmaschine und
- Fig. 4: eine vergrößerte Teilansicht auf den Spindelkopf.

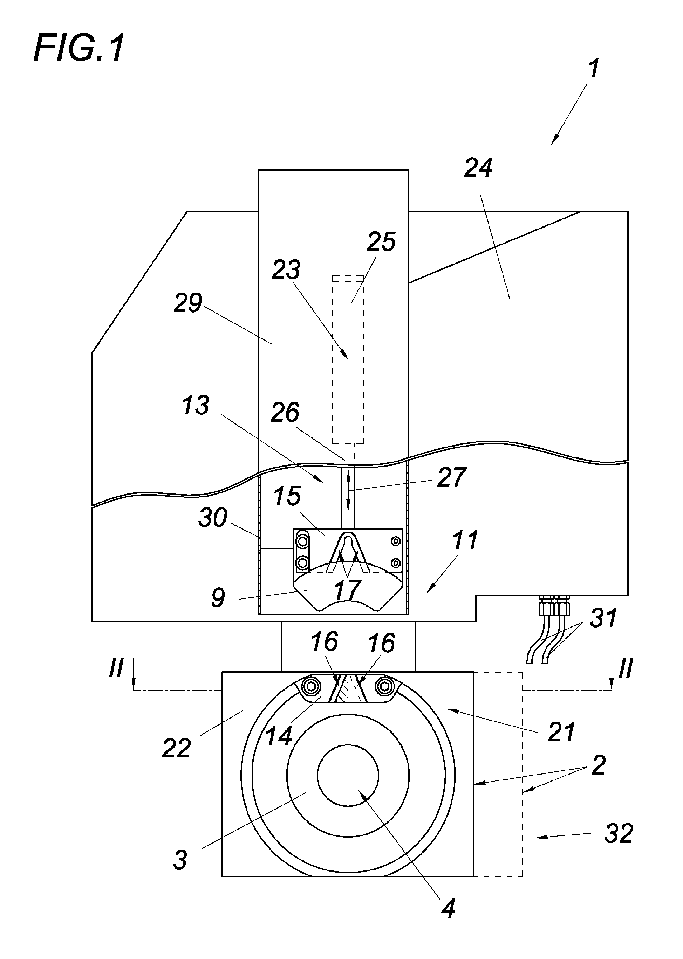

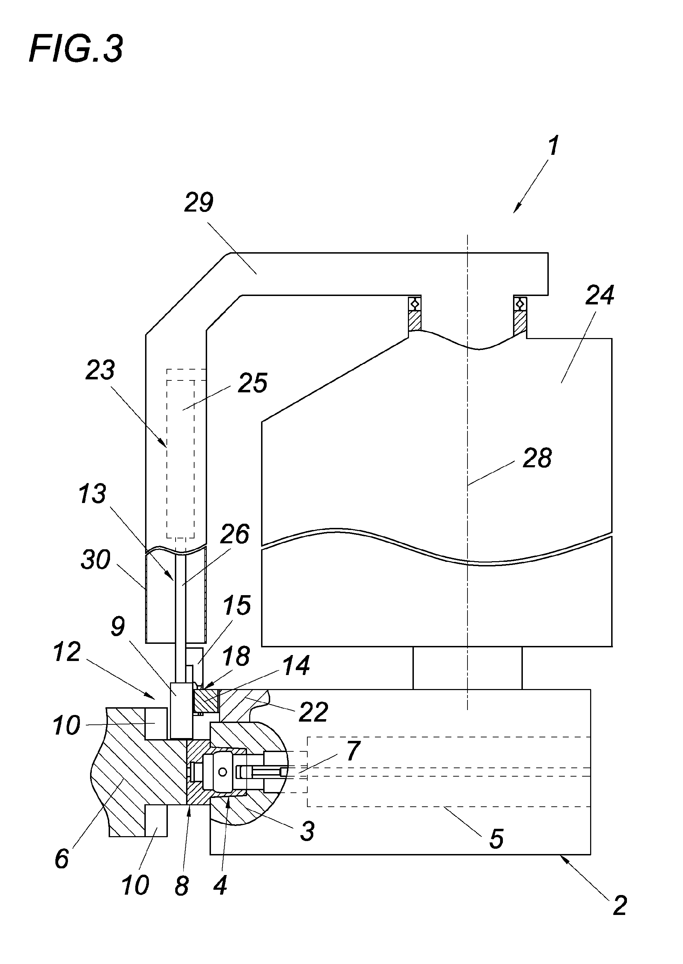

In Zusammenschau der Figuren 1 und 3 wird eine Werkzeugmaschine 1 beispielhaft dargestellt, deren Spindelkopf 2 eine von einer Arbeitsspindel 3 drehend angetriebene Werkzeugaufnahme 4 aufweist. Hierfür ist die Arbeitsspindel 3 mit einem Motor 5 des Spindelkopfs 2 verbunden. In die Werkzeugaufnahme 4 ist ein Werkzeug 6 eingespannt, und zwar über eine schematisch dargestellte Zugstange 7 eines andeutungsweise dargestellten Spannmechanismus, welche Zugstange 7 von der Maschinenseite aus in den Werkzeugschaft 8 eingreift und die Arbeitsspindel 3 mit dem Werkzeug 6 koppelt. Die Werkzeugmaschine 1 weist außerdem eine Primärspule 9 zur kontaktlosen Energie- und/oder Signalübertragung auf. Diese Funktionalität wird vom Werkzeug 6 genützt, indem diesem eine mit der Primärspule 9 der Werkzeugmaschine 1 koppelbare Sekundärspule 10 zugeordnet ist. Diese Sekundärspule 10 umgreift den Werkzeugschaft 8 des Werkzeugs ringförmig. Die Primärspule 9 weist gegenüber der Sekundärspule 10 eine Segmentform auf, wie dies nach Fig. 1 erkannt werden kann. Beide Spulen 9 und 10 sind damit induktiv koppelbar und ermöglichen eine drahtlose Übertragung. Diese Übertragung kann zur elektrischen Versorgung von Verbrauchern am Werkzeug 6 genützt werden. Zudem ist eine Übertragung von elektrischen Signalen zur Steuerung des Werkzeugs 6 und/oder zur Messdatenerfassung denkbar. Um die Primärspule 9 von einer nach Fig. 1 dargestellten Ruhelage 11 in eine nach Fig. 3 gezeigten Koppellage 12 zu bringen, weist die Werkzeugmaschine 1 eine Einrichtung 13 zur Verlagerung der Primärspule 9 auf.

Um nun die Primärspule 9 in dieser Koppellage 12 mechanisch besonders gut zu stabilisieren, wird erfindungsgemäß vorgeschlagen, dass die Einrichtung 13 zur Verlagerung der Primärspule 9 einen Anschlag 14 und einen Gegenanschlag 15 aufweist. Im Allgemeinen wird erwähnt, dass natürlich auch ein Gehäuse einer Primärspule einen entsprechenden Anschlag ausbilden kann.

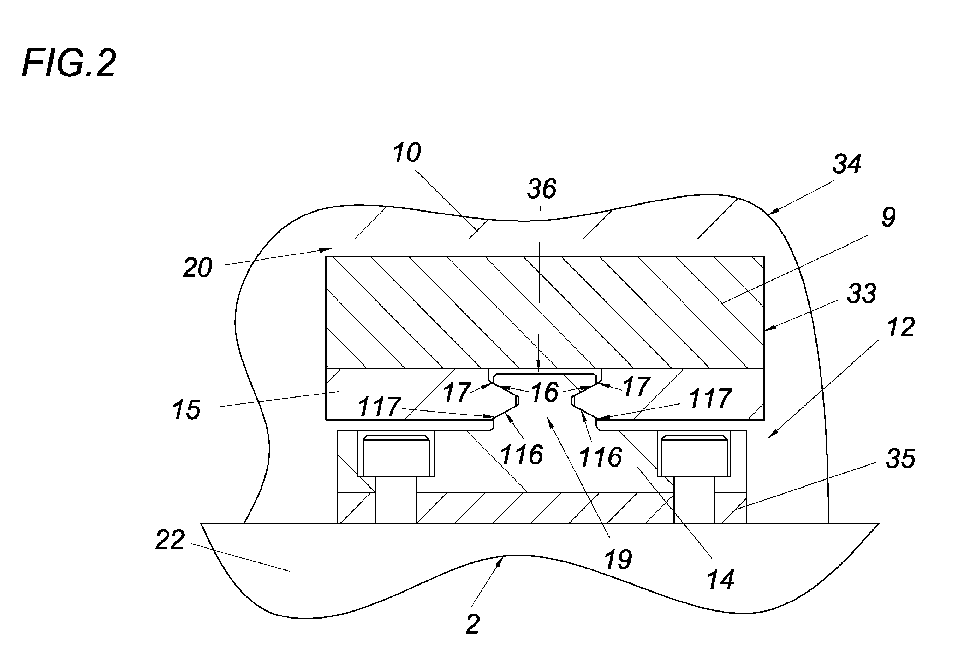

Der am Spindelkopf 2 ortsfest befestigte Anschlag 14 und der mit der Primärspule 9 verbundene und mitbewegte Gegenanschlag 15 wirken vorteilhaft formschlüssig zusammen und bilden einen anschlagbegrenzten Sitz 18 aus. In dieser Koppellage ist die Primärspule 9 ortsfest fest gelagert, welche Lagerung 36 insbesondere in der Fig. 2 zu erkennen ist. Dies führt also zu einer genauen Fixierung der Primärspule 9 in ihrer Lage am Spindelkopf 2 - zudem ist damit eine äußerst schwingungsfreie und feste Verbindung zwischen Primärspule 9 und Spindelkopf 2 sichergestellt.

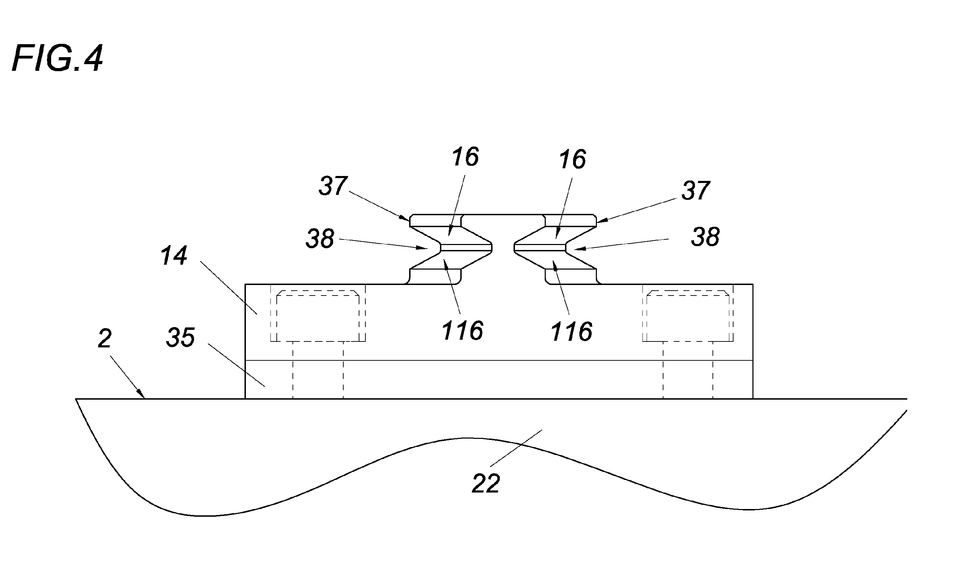

Für den Formschluss sind am Anschlag 14 zwei zueinander geneigt verlaufende Anschlagflächen 16 vorgesehen, die mit den am Gegenanschlag 15 vorgesehene Gegenflächen 17 eine Gleitführung ausbilden, welche Gleitführung im anschlagbegrenzten Sitz 18 bzw. in einer Anschlagfixierung endet. Die Anschlagflächen 16 sind, wie in Fig. 1 zu erkennen, keilförmig auseinanderlaufend, wodurch eine besonders robuste Zentrierung am anschlagbegrenzten Sitz 18 zwischen Anschlag 14 und Gegenanschlag 15 sichergestellt wird. Die Fig. 2 zeigt unter anderem den Anschlag 14 im Querschnitt nach II-II, dabei ist der Anschlag von oben dargestellt. Es ist erkennbar, dass die Querschnittsfläche der Primärspule 9 teilweise jener eines Doppelprismas 19 entspricht. Jedoch laufen ihre Keilschenkel 37 im Gegensatz zu einem Doppelprisma zusammen -siehe dazu auch Fig. 4-, um dem Anschlag 14 eine Keilform zu geben. So wird die Verbindung zwischen Anschlag 14 und Gegenanschlag 15 statisch exakt festlegt, was nur einen Freiheitsgrad zu und von der Koppellage 12 zulässt.

Um die Primärspule 9 nahe an die Sekundärspule 10 heranführen zu können bzw. um damit den Luftspalt 20 zwischen den Spulen 8, 9 für möglichst geringe Verluste/Beeinträchtigungen bei der Übertragung kein zu halten, ist der Anschlag 14 an der Stirnseite 21 des Spindelkopfs 2 befestigt - und zwar am Spindelkopfgehäuse 22 des Spindelkopfs 2, was eine hohe Ortsfestigkeit gewährleistet.

Zwischen dem Anschlag 14 und dem Spindelkopf 2 ist zudem eine auswechselbare Zwischenplatte 35 vorgesehen, die nach Fig. 2 besser erkannt werden kann. Diese Zwischenplatte 35 findet zur Feineinstellung bzw. Nachstellung der Koppellage 12 der Primärspule 9 Verwendung.

Nach den Figuren 1 und 3 ist zu erkennen, dass die Einrichtung zur Verlagerung der Primärspule 9 eine Führung 23 aufweist, die an der Werkzeugmaschine 1 getrennt vom Spindelkopf 2 befestigt ist. Spindelkopf 2 und Führung 23 sind am Schlitten 24 der Werkzeugmaschine 1 gemeinsam befestigt, welcher Schlitten 24 an einem nicht näher dargestellten Maschinenbett geführt ist. Diese lineare Führung 23 wird von einem Zylinder 25 gebildet, dessen bewegliche Kolbenstange 26 die Baugruppe aus Gegenanschlag 15 und Primärspule 9 entlang einer axialen Bewegungsachse 27 verlagern kann, nämlich von einer Ruhelage 11 in eine Koppellage 12 und umgekehrt.

Im Allgemeinen wird erwähnt, dass diese Führung 23 außerdem genutzt werden kann, den Gegenanschlag 15 stets an den Anschlag zu drücken, wenn die Primärspule 9 mit der Sekundärspule 10 gekoppelt ist, um damit die Lagefixierung der Primärspule 9 weiter zu verbessern.

Der Gegenanschlag 15 ist zudem über einen mit dem Spindelkopf 2 mitbewegbaren Schwenkarm 29 an der Werkzeugmaschine 2 schwenkbar gelagert, wobei Spindelkopf 2 und Schwenkarm 29 um die gemeinsame Schwenkachse 28 drehbar gelagert sind. Damit kann bei einem Verschwenken des Spindelkopfs 2 der Schwenkarm 29 auf konstruktiv einfache Weise passiv mitgeführt werden. Konstruktiv weiter vorteilhaft gelöst, steht die axiale Bewegungsachse 27 parallel zur Schwenkachse 28.

Wie in Figur 3 weiter zu entnehmen, ist der Spindelkopf 2 schwenkbar an der Werkzeugmaschine 1 bzw. am Schlitten 24 gelagert, nämlich um eine Schwenkachse 28 bzw. Drehachse.

Der Schwenkarm 20 weist ein Schutzgehäuse 30 auf, um die Primärspule 9 in ihrer Ruhelage 11 zu schützen. Hierzu ist innerhalb des Schutzgehäuses 30 der Zylinder 25 der Führung 23 angeordnet, über die Primärspule 9 von ihrer vom Schutzgehäuse 30 verdeckten Ruhelage 11, wie nach Fig. 1 zu erkennen, in ihre dem Schutzgehäuse 30 vorstehende Koppellage 12, wie nach Fig. 3 zu erkennen, beweglich gelagert ist.

Verunreinigungen an bzw. zwischen Primärspule 9 und Sekundärspule 10 sind über zwei Reinigungsdüsen 31 zu entfernen. Die Reinigungsdüsen 31 sind am Schlitten 24 befestigt. Indem der Spindelkopf 2 in eine in Fig. 1 strichliert dargestellte Reinigungslage 32 verschwenkt wird, sind die Reinigungsdüsen 31 besonders wirkungsvoll - wobei vorstellbar ist, dass in dieser Reinigungslage 32 des Spindelkopfs 2 die Primärspule 9 in ihre Koppellage 12 verlagert wird. Damit kann beispielsweise der induktiv gekoppelte Teil von Primärseite 33 und Sekundärseite 34 zur kontaktlosen Energie- und/oder Signalübertragung frei von nicht dargestellten Spänen gehalten werden.

Nach Fig. 4 ist der keilförmige Anschlag 14 vergrößert aus einer Ansicht von oben, also aus Richtung der Primärspule 9 dargestellt. Besonders sind die beiden Keilschenkel 37 zu erkennen, denen je zwei Anschlagflächen 16, 116 zugeordnet sind. Diese beiden Anschlagflächen 16, 116 werden jeweils durch eine der beiden v-förmigen Ausnehmungen 38 in den Keilschenkeln 37 ausgebildet.

## Patentansprüche

1. Werkzeugmaschine mit einer Primärspule (9) zur kontaktlosen Energie- und/oder Signalübertragung, mit einem eine Werkzeugaufnahme (4) aufweisenden Spindelkopf (2) für ein Werkzeug (6), das eine mit der Primärspule (9) der Werkzeugmaschine (1) koppelbare Sekundärspule (10) aufweist, und mit einer Einrichtung (13) zur Verlagerung der Primärspule (9) von einer entkoppelten Ruhelage (11) in eine Koppellage (12) mit der Sekundärspule (10) des aufgenommenen Werkzeugs (6), **dadurch gekennzeichnet, dass** die Einrichtung (13) zur Verlagerung der Primärspule (9) sowohl mindestens einen am Spindelkopf (2) ortsfest befestigten Anschlag (14) als auch wenigstens einen mit Primärspule (9) verbundenen und mitbewegten Gegenanschlag (15) aufweist, der mit dem Anschlag (14) zur am Spindelkopf (2) ortsfesten Lagerung (36) der sich in Koppellage (12) befindlichen Primärspule (9) formschlüssig zusammenwirkt.

2. Werkzeugmaschine nach Anspruch 1, **dadurch gekennzeichnet, dass** der Anschlag (14) wenigstens zwei zueinander geneigt verlaufende Anschlagflächen (16 bzw. 116) aufweist, die mit Gegenflächen (17 bzw. 117) des Gegenanschlags (15) zusammenwirken.

3. Werkzeugmaschine nach Anspruch 2, **dadurch gekennzeichnet, dass** die Anschlagflächen (16 bzw. 116) an den Keilschenkeln (37) des Anschlags (14) vorgesehen sind.

4. Werkzeugmaschine nach Anspruch 3, **dadurch gekennzeichnet, dass** der Anschlag (14) auf jedem Keilschenkel (37) eine Ausnehmung (38) mit je zwei Anschlagflächen (16, 116) aufweist.

5. Werkzeugmaschine nach Anspruch 4, **dadurch gekennzeichnet, dass** die Querschnittsfläche des Anschlags (14) in Ihrer Kontur wenigstens bereichsweise jener eines Doppelprismas entspricht.

6. Werkzeugmaschine nach einem der Ansprüche 1 bis 5, **dadurch gekennzeichnet, dass** der Anschlag (14) an der Stirnseite (21) des Spindelkopfs (2) befestigt ist.

7. Werkzeugmaschine nach einem der Ansprüche 1 bis 6, **dadurch gekennzeichnet, dass** zwischen Anschlag (14) und Spindelkopf (2) eine auswechselbare Zwischenplatte (35) vorgesehen ist.

8. Werkzeugmaschine nach einem der Ansprüche 1 bis 7, **dadurch gekennzeichnet, dass** die Einrichtung (13) zur Verlagerung der Primärspule (9) eine Führung (23), insbesondere Linearführung, aufweist, die getrennt vom Spindelkopf (2) an der Werkzeugmaschine (1) befestigt ist.

9. Werkzeugmaschine nach Anspruch 8, **dadurch gekennzeichnet, dass** der Spindelkopf (2) und die Führung (23) an einem Schlitten (24) der Werkzeugmaschine (1) gemeinsam befestigt sind.

10. Werkzeugmaschine nach einem der Ansprüche 1 bis 9, **dadurch gekennzeichnet, dass** der Spindelkopf (2) schwenkbar gelagert ist.

11. Werkzeugmaschine nach Anspruch 10, **dadurch gekennzeichnet, dass** der Gegenanschlag (15) über einen mit dem Spindelkopf (2) mitbewegbaren Schwenkarm (29) an der Werkzeugmaschine (1) schwenkbar gelagert ist.

12. Werkzeugmaschine nach Anspruch 11, **dadurch gekennzeichnet, dass** der Spindelkopf (2) und der Schwenkarm (29) um eine gemeinsame Schwenkachse (28) drehbar gelagert sind.

13. Werkzeugmaschine nach Anspruch 11 oder 12, **dadurch gekennzeichnet, dass** der Schwenkarm (29) ein Schutzgehäuse (30) aufweist, in dem die Primärspule (9) von ihrer vom Schutzgehäuse (30) verdeckten Ruhelage (11 ) in ihre dem Schutzgehäuse (30) vorstehende Koppellage (12) beweglich gelagert ist.

14. Werkzeugmaschine nach einem der Ansprüche 1 bis 13, **dadurch gekennzeichnet, dass** dass an der Werkzeugmaschine (1) mindestens eine Reinigungsdüse (31 ) zum Reinigen des Anschlags (14) vorgesehen ist.

15. Werkzeugmaschine nach Anspruch 14, **dadurch gekennzeichnet, dass** der Spindelkopf (2) für eine Bewegung in eine gegenüber der Reinigungsdüse ausgerichtete Reinigungslage (32) ausgebildet ist.
